# EUROPÄISCHE PATENTSCHRIFT

(11) **EP 2 267 343 B1**
(45) Veröffentlichungstag und Bekanntmachung des Hinweises auf die Patenterteilung: **13.04.2011**
(21) Anmeldenummer: 09008277.7
(22) Anmeldetag: 24.06.2009
(51) Int. Cl.: F16K 1/42

(54) **Einschraub-Wege-Sitzventil**
Screw-in directional seat valve
Soupape de siège à voies de vissage

(43) Veröffentlichungstag der Anmeldung: 29.12.2010
(73) Patentinhaber: HAWE Hydraulik SE, 81673 München (DE)
(72) Erfinder: Neumair, Georg, 85402 Thalhausen (DE); Faber, Bernd, 85356 Freising (DE); Zwingler, Engelbert, 83629 Feldkirchen-Westerham (DE)
(74) Vertreter: Grünecker, Kinkeldey, Stockmair & Schwanhäusser Anwaltssozietät

(56) Entgegenhaltungen:
- DE-A1- 4 118 190
- GB-A- 220 219
- GB-A- 233 850
- US-A- 4 542 879
- US-A- 4 834 337

## Beschreibung

Die Erfindung betrifft ein Einschraub-Wege-Sitzventil der im Oberbegriff des Patentanspruchs 1 angegebenen Art.

Ein solches Einschraub-Wege-Sitzventil ist aus der Druckschrift D7921 "Einschraub-Sitzventil Typ BVE", März 2008-00, der Firma HAWE Hydraulik SE, Streitfeldstr. 25, 81673 München bekannt. Im bekannten Einschraub-Wege-Sitzventil endet das mit dem Magnetrohr des Betätigungsmagneten einstückige Einschraubgehäuse (Seite 4 der Druckschrift D 7921) an einem Außengewindeabschnitt. In das Einschraubgehäuse ist von unten eine erste Hülse abgedichtet eingepresst, an der ein erster Ventilsitz ausgebildet ist. Durch die erste Hülse und das Einschraubgehäuse wird von unten der Ventilkegel eingesetzt, ehe wegen des größeren Außendurchmessers der Sitzfläche des Ventilkegels eine zweite Hülse von unten auf Anschlag über die erste Hülse gepresst wird. In der zweiten Hülse ist ein zweiter Ventilsitz vorgesehen. Die beiden Sitzflächen des Ventilkegels arbeiten wechselweise mit den beiden Ventilsitzen zusammen, wobei der Ventilkegel einen Hub von etwa 0,8 bis 1,0 mm ausführt, wenn ein Anker des Betätigungsmagneten gegen eine Schließfeder anzieht. In eingeschraubtem Zustand des Einschraub-Wege-Sitzventils wird die zweite Hülse an einer Schulter der Stufenbohrung auf Anschlag gespannt, und wird über die erste Hülse ein Polkern des Betätigungsmagneten axial auf Anschlag fixiert. In Axialrichtung liegen zwischen dem Anker des Betätigungsmagneten und dem zweiten Ventilsitz mehrere Trennstellen vor, sodass wegen unvermeidbarer Herstellungstoleranzen der axiale Abstand zwischen den ersten und zweiten Ventilsitzen und deren Abstand vom Anker innerhalb einer Baureihe unzweckmäßig flukturieren kann. Eine nachträgliche Justierung zum Beseitigen der Fluktuation ist ohne Zerlegen und teure spanabhebende Bearbeitung einzelner Komponenten nicht möglich. Dies wäre aber wichtig, um ein optimales innerhalb der Baureihe gleichbleibendes Verhältnis zwischen dem Magnetkraftverlauf und dem Hub des Ventilkegels zu erzielen.

Weiterer Stand der Technik ist enthalten in: US 4 542 879 A, DE 41 18 190 A, GB 233 850 A, GB 220 219 A und US 4 834 337 A.

Der Erfindung liegt die Aufgabe zugrunde, ein baulich einfaches und damit kostengünstiges Einschraub-Wege-Sitzventil der Eingangs genannten Art zu schaffen, das ohne spanabhebende Bearbeitungen eine bequeme jederzeitige Justierung zwischen dem Magnetkraftverlauf und dem Hub ermöglicht.

Die gestellte Aufgabe wird mit den Merkmalen des Patentanspruchs 1 gelöst.

Da im Einschraubgehäuse nur mehr eine Hülse vorgesehen ist, die einfach bearbeitbar und montierbar ist, reduziert sich die Teileanzahl und ist eine kostengünstige Herstellung möglich. Da diese Hülse durch die Gewindeverbindung im Einschraubgehäuse axial positioniert und durch die Presssitzzone abgedichtet ist, wobei die Presssitzzone eine Verdrehsicherung gegen unkontrolliertes Verschrauben der Gewindeverbindung bildet, lässt sich die axiale Position des Ventilsitzes der Hülse relativ zum Einschraubgehäuse und damit zum Betätigungsmagneten jederzeit justieren, und durch Verschrauben der Gewindeverbindung eine optimale Einstellung zwischen dem Magnetkraftverlauf und dem Hub des Ventilkegels herstellen. Die Presssitzzone dichtet zwischen den beiden axialen Seiten des Ventilsitzes in der Hülse ab, sodass die leckagefreie Absperrstellung des Einschraub-Sitzventils durch die gegebenenfalls nicht ausreichend dichte Gewindeverbindung allein nicht gefährdet wird. Die Montage der Hülse im Einschraubgehäuse ist einfach, weil kein Einpressvorgang, sondern nur ein Schraubvorgang erforderlich ist.

Zweckmäßig wird die Presssitzzone zwischen kreiszylindrischen Passflächen im Einschraubgehäuse und an der Hülse gebildet. Durch Wahl der Passung und der axialen Länge der Presssitzzone lassen sich herstellungstechnisch einfach eine optimale Abdichtung und eine ausreichende Verdrehsicherung erzielen. Der maximal wählbare Halt in der Presssitzzone ergibt durch eine ausreichend bequeme Montierbarkeit der Hülse und die Festigkeit der Materialien des Einschraubgehäuses und der Hülse, die zweckmäßig aus Stahl bestehen, während sich der minimal wählbare Halt durch die erforderliche Dichtigkeit und die Sicherheit gegen selbsttätiges Lösen der Gewindeverbindung unter Vibrationen oder axialen variierenden Druckkräften ergibt.

Sobald die Hülse im Einschraubgehäuse montiert ist, ist die durch eine relative Drehverstellung zwischen dem Einschraubgehäuse und der Hülse über die Gewindeverbindung axiale Position der Hülse jederzeit im Einschraubgehäuse justierbar. Somit lässt sich in einer Baureihe die gleiche Abstimmung zwischen dem Magnetkraftverlauf und dem Hub des Ventilkegels justieren. Bei der Montage wird zweckmäßig mit speziell bearbeiteten Gewindeabschnitten in der Gewindeverbindung und gegebenenfalls mit Schmiermittel gearbeitet.

Um Justierungen feinfühlig vornehmen zu können, kann es zweckmäßig sein, die Gewindeverbindung aus Feingewinden auszubilden.

Die Durchmesser der Gewindeverbindung und der Presssitzzone können in etwa gleich sein. Dies schließt nicht aus, bei speziellen Anforderungen diese Durchmesser unterschiedlich zu wählen.

Bei einer zweckmäßigen Ausführungsform ist die axiale Länge der Gewindeverbindung zumindest etwas größer als die axiale Länge der Presssitzzone. Dadurch werden die vorhandene axiale Baulänge gut genutzt, ein ausreichend langer Justierbereich zum Montieren der Presssitzzone geschaffen und eine ausreichende Gewindetraglänge zum Herstellen der Presssitzzone erzielt.

Zweckmäßig wird der Außendurchmesser der Hülse anschließend an diese Passfläche abnehmend ausgebildet, um die Hülse bei der Montage mit ausreichend Schmiermittel bequem einführen zu können. Es soll sichergestellt sein, dass die Gewindeverbindung bereits ausreichend trägt, wenn die Passflächen zunehmend in einander geschoben und dabei relativ zueinander gedreht werden.

Herstellungstechnisch günstig sind zwischen der jeweiligen Passfläche und dem jeweiligen Gewindeabschnitt an der Hülse eine Durchmesserstufe und im Einschraubgehäuse ein Einstich vorgesehen. Die Durchmesserstufe an der Hülse erleichtert die spanenden Bearbeitungsschritte beim Formen der Passfläche und des Gewindeabschnitts. Das gleiche wird mit dem Einstich im Einschraubgehäuse erzielt. Außerdem schafft der Einstich einen Freiraum, in welchem sich für die Montage eingesetztes Schmiermittel sammeln kann, und der auch Einfluss auf die Größe des Justierbereichs der Hülse im Einschraubgehäuse hat.

Herstellungstechnisch einfach ist in der Hülse eine Schraubhandhabe geformt. Dies ist zweckmäßig ein Innensechskant, der einem Drehwerkzeug große Kraftangriffsflächen bietet, um das nötige Drehmoment übertragen zu können.

Bei einer zweckmäßigen Ausführungsform erstreckt sich das Einschraubgehäuse über die Hülse zumindest annähernd bis zum freien Ende der Hülsen. Das Einschraubgehäuse besitzt zwei außenseitige Dichtungs-Aufnahmenuten, z. B. für O-Ringe, und übernimmt somit die Abdichtung zwischen unterschiedlichen Druckzonen in der Stufenbohrung, sobald das Einschraub-Wege-Sitzventil montiert ist.

Bei einer weiteren Ausführungsform sind im Einschraubgehäuse zwei axial beabstandete Reihen von Querdurchgängen geformt, und wird zwischen diesen Reihen innen im Einschraubgehäuse ein weiterer Ventilsitz direkt eingeformt. Dies trägt zur Reduzierung der Teileanzahl bei, und ermöglicht die Schaffung ausreichend große Durchström-Querschnitte.

Ferner können die Querdurchgänge jeweils in eine außenseitige Ringnut im Einschraubgehäuse münden, um auch an der Außenseite des Einschraubgehäuses große Strömungsdurchgänge zu schaffen.

In Betriebsposition ist das Einschraub-Wege-Sitzventil mit dem Einschraubgehäuse in eine Stufenbohrung, vorzugsweise eines Blocks, auf Anschlag an der Stufenbohrungsmündung eingeschraubt. Dabei bleibt jedoch zwischen einem in der Stufenbohrung liegenden Ende des Einschraubgehäuses und auch dem freien Ende der Hülse ein Zwischenabstand bis zu einem Grund der Stufenbohrung, sodass weder das Einschraubgehäuse noch die Hülse in diesem innenliegenden Bereich der Stufenbohrung auf Anschlag gebracht werden. Dadurch entfällt zumindest am Einschraubgehäuse eine weitere, toleranzbehaftete Endfläche. Außerdem ermöglicht es der axiale Zwischenabstand, die Hülse aus dem Ende des Einschraubgehäuses vorstehen zu lassen.

Zur weiteren baulichen Vereinfachung ist ein Magnetrohr des Betätigungsmagneten vom Einschraubgehäuse baulich getrennt und unter Festlegen eines Außenflansches eines Polkerns auf Anschlag in das Einschraubgehäuse eingeschraubt. Dies ermöglicht die Verwendung eines kostengünstigen, weil herstellungstechnisch einfachen Magnetrohrs, das den Polkern im Einschraubgehäuse axial positioniert, ohne auf den beim bekannten Einschraub-Wege-Sitzventil erzeugten Anschlag in der Stufenbohrung angewiesen zu sein.

Anhand der Zeichnung wird eine Ausführungsform des Erfindungsgegenstandes erläutert. Es zeigen:
- Fig. 1: einen Längsschnitt durch ein in einem Block montiertes Einschraub-Wege- Sitzventil mit Magnetbetätigung, und
- Fig. 2: ein Detail aus Fig. 1 in größerem Maßstab.

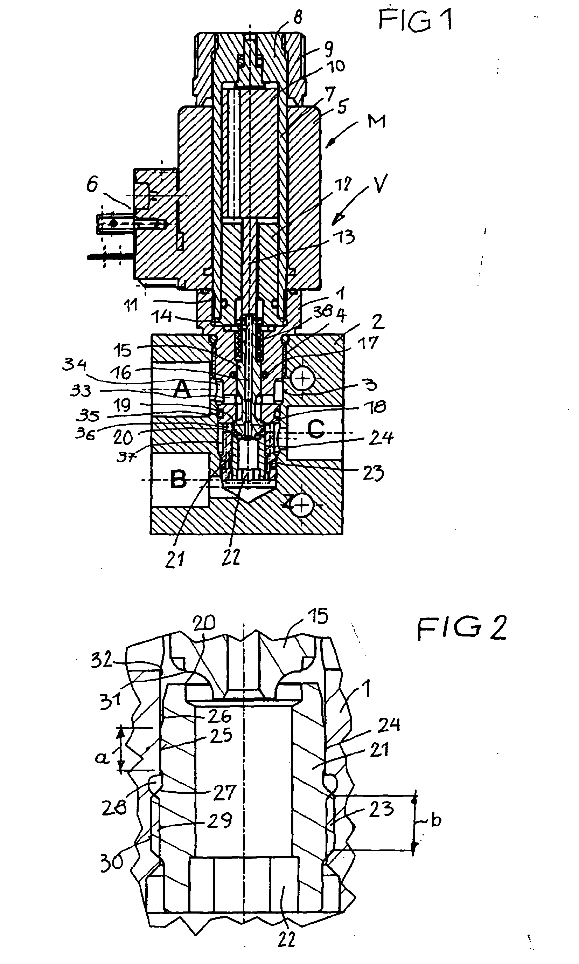

Die Fig. 1 und Fig.2 gehören zu einem Einschraub-Wege-Sitzventil V, hier einem 3/2-Wege-Sitzventil, das zwischen drei zu einer Stufenbohrung 3 führenden Anschlüssen A, B, C in einem Block 2 montiert ist, wobei zumindest die wesentlichen Hydraulikkomponenten des Einschraub-Wege-Sitzventils V, wie gegebenenfalls auch der Block 2 (der gegebenenfalls Teil eines Hydraulikzylinder-Gehäuses sein kann) aus Stahl hergestellt sind. Alternativ könnte das Einschraub-Wege-Sitzventil V ein 2/2-Wege-Sitzventil (nicht gezeigt) sein.

Ein Einschraubgehäuse 1 des Einschraub-Wege-Sitzventils V ist in dem Block 2 in die Stufenbohrung 3 eingeschraubt und durch ein Gewinde 4 an der Stufenbohrungsmündung auf Anschlag festgelegt (und abgedichtet).

Der Betätigungsmagnet M ist beispielsweise ein Schwarz/Weiß-Magnet, könnte jedoch bei Bedarf ein Proportionalmagnet sein. Der Betätigungsmagnet M weist ein außenliegendes Spulengehäuse 5 mit elektrischen Anschlüssen 6 auf, das über ein Magnetrohr 7 geschoben und durch eine mit einem Verschlussende 8 des Magnetrohres 7 verschraubte Überwurfmutter 9 auf Anschlag gegen das Einschraubgehäuse 1 gebracht ist. Im Magnetrohr 7 ist ein Anker 10 enthalten. Das Magnetrohr 7 ist am unteren Ende mit einem Gewinde 11 im Einschraubgehäuse 1 festgelegt und spannt einen Außenflansch 14 eines Polkerns 12 gegen eine Schulter im Einschraubgehäuse 1. Dieser Bereich ist unterseitig abgedichtet. Im Polkern 12 ist ein Stößel 13 verschiebbar untergebracht, über den der Anker 10 einen Ventilkegel 15 gegen eine Schließfeder 38 beaufschlagen kann. Der Ventilkegel 15 ist im Einschraubgehäuse 1 abgedichtet verschiebbar geführt (O-Ring 17) und enthält eine mittige Längsbohrung 16. Am unteren Ende weist der Ventilkegel 15 eine Verdickung 18 auf, an der obere und untere ringförmige Sitzflächen geformt sind, die mit einem Ventilsitz 19 im Einschraubgehäuse 1 und einem Ventilsitz 20 in einer Hülse 21 wechselseitig zusammen wirken und deren Außendurchmesser größer sind als die Innendurchmesser der Ventilsitze 19, 20.

Die Hülse 21 mit dem Ventilsitz 20 ist deshalb baulich von dem Einschraubgehäuse 1 getrennt und in dieses eingesetzt, weil der Ventilkegel 15 eingebaut werden muss, ehe der untere Ventilsitz 20 angebracht wird.

Die Hülse 21, die im unteren Ende des Einschraubgehäuses 1 sitzt, weist eine Drehhandhabe 23, beispielsweise einen Innensechskant, auf und ist im Einschraubgehäuse 1 durch eine Gewindeverbindung 23, vorzugsweise aus Feingewindeabschnitten, axial positioniert, und durch eine Presssitzzone 24 abgedichtet, wobei die Presssitzzone 24 gleichzeitig eine Verdrehsicherung für die Gewindeverbindung 23 bildet.

Gemäß Fig. 2 ist die Gewindeverbindung 23 unterhalb der darüberliegenden Presssitzzone 24 angeordnet. Die axiale Länge der Gewindeverbindung 23 ist mit b hervorgehoben und, vorzugsweise, etwas größer als die axiale Länge a der Presssitzzone 24. Die Gewindeverbindung 23 wird durch ineinander verschraubte Gewindeabschnitte 29, 30 an der Hülse 21 und im Einschraubgehäuse 1 gebildet, während die Presssitzzone 20 zwischen ineinander gepressten kreiszylindrischen Passflächen 25 und 32 an der Hülse 21 und im Einschraubgehäuse 1 gebildet ist.

Anschließend an die Passfläche 25 nimmt der Außendurchmesser der Hülse 21 bei 26, z. B. mit einer konischen Schulter ab. Zwischen der Passfläche 25 und dem Gewindeabschnitt 29 kann eine weitere Durchmesserstufe 27 geformt sein. Die Passfläche 32 im Einschraubgehäuse 1 ist vom Innen-Gewindeabschnitt 30 durch einen Einstich 28 getrennt.

In der Montierlage in Fig. 1 steht das untere Ende des Einschraubgehäuses 1, wie auch das freie Ende der Hülse 21, dem Grund der Stufenbohrung 3 mit einem axialem Zwischenabstand anschlagfrei gegenüber. Vom Anschluss A verläuft über die Stufenbohrung 3 und eine Ringnut 34 sowie Querdurchgängen 33 im Einschraubgehäuse 1 eine Strömungsverbindung zum oberen Ventilsitz 19, während vom Anschluss C über die Stufenbohrung 3 und eine Ringnut 37 des Einschraubgehäuses 1 und weitere Querdurchgänge 36 eine Strömungsverbindung zum Zwischenraum zwischen den Ventilsitzen 19, 20 verläuft. Der Anschluss B steht schließlich über den Grund der Stufenbohrung 3 und die Innenbohrung der Hülse 21 mit dem Ventilsitz 20 in Strömungsverbindung.

In dem in Fig. 1 gezeigten stromlosen Zustand des Betätigungsmagneten M wird der Ventilkegel 15 durch eine Schließfeder 38 nach oben gezogen, sodass der obere Ventilsitz 19 leckagefrei abgesperrt wird, und der Anschluss A vom Anschluss C getrennt wird. Hingegen ist der Ventilsitz 20 (siehe Fig. 2) von der Sitzfläche 31 an der unteren Seite der Verdickung 18 freigegeben, sodass die Strömungsverbindung vom Anschluss B zum Anschluss C offen ist. Wird der Betätigungsmagnet M bestromt, dann werden der Anker C zum Polkern 12 gezogen und der Ventilkegel 15 über den Stößel 13 gegen die Kraft der Schließfeder 38 nach unten verstellt, bis (Fig. 2) die Sitzfläche 31 auf dem Ventilsitz 20 aufsetzt und den Anschluss B leckagefrei vom Anschluss C trennt, während nun der Anschluss A mit dem Anschluss C über den Ventilsitz 19 verbunden ist.

Um die axiale Position des Ventilsitzes 20 relativ zum Ventilsitz 19 und damit relativ zum Polkern 12 im Hinblick auf eine optimale Einstellung zwischen dem Magnetkraftverlauf und dem Hub des Ventilkegels 15 justieren zu können, braucht nur die Hülse 21 mit der Drehhandhabe 22 relativ zum Einschraubgehäuse 1 verdreht zu werden. Dieser axiale Abstand kann vergrößert oder verkleinert werden.

Zur erstmaligen Montage der Hülse 21 im Einschraubgehäuse 1 wird zweckmäßig mit Schmiermittel gearbeitet um, sobald die Gewindeverbindung 23 ausreichend tragfähig ist, die Passflächen 25, 32 axial ineinander zu schieben und dabei relativ zueinander zu verdrehen. Der Passsitz zwischen den Passflächen 25 und 32 ist zweckmäßig so gewählt, dass im Inneren des Einschraubgehäuses 1 leckagefreie Dichtheit zwischen den Anschlüssen B und C erreicht und auch sichergestellt ist, dass sich die Gewindeverbindung 23 nicht unter betriebsbedingten Erschütterungen oder hydraulischen Druckstößen lösen oder verstellen kann.

Bei der gezeigten Ausführungsform ist die Presssitzzone 24 oberhalb der Gewindeverbindung 23 angeordnet. Eine umgekehrte Anordnung wäre ebenfalls möglich. Die Drehhandhabe 22 braucht nicht notwendigerweise innen in der Hülse 21 angeordnet zu sein, sondern könnte auch außen am freien Ende der Hülse 21 angeordnet werden.

Eine erstmalige Justierung, um den Magnetkraftverlauf optimal an den Hub des Ventilkegels 15 anzupassen, kann bei der Montage der Hülse 21 im Einschraubgehäuse 1 vorgenommen und vorab überprüft werden, sodass in einer Baureihe aus mehreren solcher Einschraub-Wege-Sitzventile V trotz unvermeidbarer Herstellungstoleranzen keine Streuungen auftreten. Es ist jedoch auch möglich, nachträglich Nachjustierungen vorzunehmen, wofür das Einschraub-Wege-Sitzventil V aus dem Block 2 herausgeschraubt wird, um eine Zugangsmöglichkeit zur Drehhandhabe 22 zu schaffen.

## Patentansprüche

1. Einschraub-Wege-Sitzventil (V), vorzugsweise direkt gesteuertes und magnetbetätigtes 2/2 - oder 3/2 - Wege-Sitzventil aus Stahl für die Hochdruckhydraulik, mit einem Einschraubgehäuse (1), in dem wenigstens eine einen Ventilsitz (20) bildende Hülse (21) axial positioniert ist, und mit einem innenliegenden Ventilkegel (15), der eine Sitzfläche (31) mit größerem Außendurchmesser als dem Innendurchmesser des Ventilsitzes (20) besitzt, **dadurch gekennzeichnet, dass** die Hülse (21) im Einschraubgehäuse (1) durch eine Gewindeverbindung (23) axial positioniert und durch eine Presssitzzone (24) abgedichtet ist, und dass die Presssitzzone (24) eine Verdrehsicherung für die Gewindeverbindung (23) bildet.

2. Einschraub-Wege-Sitzventil nach Anspruch 1, **dadurch gekennzeichnet, dass** die Presssitzzone (24) zwischen kreiszylindrischen Passflächen (25,32) im Einschraubgehäuse (1) und an der Hülse (21) gebildet ist.

3. Einschraub-Wege-Sitzventil nach Anspruch 1, **dadurch gekennzeichnet, dass** die axiale Position der Hülse (21) im Einschraubgehäuse (1) durch eine relative Drehverstellung zwischen dem Einschraubgehäuse (1) und der Hülse (21) über die Gewindeverbindung (23) justierbar ist.

4. Einschraub-Sitzventil nach Anspruch 1, **dadurch gekennzeichnet, dass** die Gewindeverbindung (23) Feingewinde (29,30) aufweist.

5. Einschraub-Wege-Sitzventil nach Anspruch 1, **dadurch gekennzeichnet, dass** die Durchmesser der Gewindeverbindung (23) und der Pressitzzone (24) in etwa gleich sind.

6. Einschraub-Wege-Sitzventil nach Anspruch 1, **dadurch gekennzeichnet, dass** die axiale Länge (b) der Gewindeverbindung (23) größer ist als die axiale Länge (a) der Presssitzzone (24).

7. Einschraub-Wege-Sitzventil nach Anspruch 2, **dadurch gekennzeichnet, dass** der Außendurchmesser der Hülse (21) anschließend an die Passfläche (25) abnehmend ausgebildet ist.

8. Einschraub-Wege-Sitzventil nach Anspruch 2, **dadurch gekennzeichnet, dass** zwischen der Passfläche (25,32 ) und einem Gewindeabschnitt (29,30) an der Hülse (21) eine Durchmesserstufe (27) und im Einschraubgehäuse (1) ein Einstich (28) vorgesehen sind.

9. Einschraub-Wege-Sitzventil nach Anspruch 1, **dadurch gekennzeichnet, dass** in der Hülse (21) eine Schraubhandhabe (22), vorzugsweise ein Innensechskant, vorgesehen ist.

10. Einschraub-Wege-Sitzventil nach Anspruch 1, **dadurch gekennzeichnet, dass** sich das Einschraubgehäuse (1) über die Hülse (21) und zumindest annähernd bis zum freien Ende der Hülse (21) erstreckt und, vorzugsweise, zwei außenseitige Dichtungs-Aufnahmenuten aufweist.

11. Einschraub-Wege-Sitzventil nach Anspruch 1, **dadurch gekennzeichnet, dass** im Einschraubgehäuse (1) zwei axial beabstandete Umfangsreihen von Querdurchgängen (33, 36) geformt sind, und dass zwischen den Reihen im Einschraubgehäuse (1) ein weiterer Ventilsitz (19) vorgesehen ist.

12. Einschraub-Wege-Sitzventil nach Anspruch 11, **dadurch gekennzeichnet, dass** die Querdurchgänge (33, 36) jeweils in eine außenseitige Ringnut (34, 37) im Einschraubgehäuse (1) münden.

13. Einschraub-Wege-Sitzventil nach wenigstens einem der vorhergehenden Ansprüche, **dadurch gekennzeichnet, dass** das Einschraubgehäuse (1) in eine Stufenbohrung (3), vorzugsweise eines Blocks (2), auf Anschlag an der Stufenbohrungsmündung geschraubt ist, und dass ein in der Stufenbohrung (3) liegendes Ende des Einschraubgehäuses (1) und das freie Ende der Hülse (21) einem Grund der Stufenbohrung (3) mit axialem Abstand anschlagfrei gegenüberliegen.

14. Einschraub-Wege-Sitzventil nach wenigstens einem der vorhergehenden Ansprüche, **dadurch gekennzeichnet, dass** ein Magnetrohr (7) des Betätigungsmagneten (M) vom Einschraubgehäuse (1) baulich getrennt und unter Festlegen eines Außenflansches (14) eines Polkerns (12) auf Anschlag in das Einschraubgehäuse (1) eingeschraubt ist.

## Claims

1. Screw-in multi-way seat valve (V), preferably directly controlled and solenoid actuated 2/2 or 3/2 way seat valve made from steel for high pressure hydraulic applications, comprising a screw-in housing (1), a sleeve (21) forming at least one valve seat (20) being axially positioned in the screw-in housing (1), and an interior valve cone (15) having a seat surface (31) with a larger outer diameter than the inner diameter of the valve seat (20) **characterised in that** the sleeve (21) is axially positioned in the screw-in housing (1) by a threaded connection (23) and is sealed by a press fit zone (24), and that the press fit zone (24) forms an anti-rotation protection for the threaded connection (23).

2. Screw-in multi-way seat valve according to claim 1, **characterised in that** the press fit zone (24) is formed between circular cylindrical fitting surfaces (15, 32) in the screw-in housing (1) and at the sleeve (21).

3. Screw-in multi-way seat valve according to claim 1, **characterised in that** the axial position of the sleeve (21) within the screw-in housing (1) is adjustable via the threaded connection (23) by a relative rotational adjustment between the screw-in housing (1) and the sleeve (21).

4. Screw-in multi-way seat valve according to claim 1, **characterised in that** the threaded connection (23) consists of fine pitch threads (29, 30).

5. Screw-in multi-way seat valve according to claim 1, **characterised in that** the diameters of the threaded connection (23) and of the press fit zone (24) are substantially equal.

6. Screw-in multi-way seat valve according to claim 1, **characterised in that** the axial extension (b) of the threaded connection (23) is larger than the axial extension (a) of the press fit zone (24).

7. Screw-in multi-way seat valve according to claim 2, **characterised in that** the outer diameter of the sleeve (21) decreases in continuation of the fitting surface (25).

8. Screw-in multi-way seat valve according to claim 2, **characterised in that** a diameter step (27) is provided at the sleeve (21) and a circumferential groove (28) is formed in the screw-in housing (1) between the fitting surface (25, 32) and one thread section (29, 30), respectively.

9. Screw-in multi-way seat valve according to claim 1, **characterised in that** a rotation handhold (22), preferably an interior wrench hexagon socket, is provided in the sleeve (21).

10. Screw-in multi-way seat valve according to claim 1, **characterised in that** the screw-in housing (1) extends over the axial length of the sleeve (21) and at least substantially to the free end of the sleeve (21), and has, preferably, two outer sealing receiving grooves.

11. Screw-in multi-way seat valve according to claim 1, **characterised in that** two axially distant circumferential arrays of lateral passages (33, 36) are formed in the screw-in housing (1), and that a further valve seat (19) is provided between the arrays in the screw-in housing (1).

12. Screw-in multi-way seat valve according to claim 11, **characterised in that** the lateral passages (33, 36) respectively lead into an outside annular groove (34, 37) in the screw-in housing (1).

13. Screw-in multi-way seat valve according to at least one of the preceding claims, **characterised in that** the screw-in housing (1) is screwed into a stepped bore (3), preferably of a block (2), into abutment at the mouth of the stepped bore, and that an end of the screw-in housing (1) lying inside the stepped bore (3) and the free end of the sleeve (21) both face with axial distance a bottom of the stepped bore (3) without abutment.

14. Screw-in multi-way seat valve according to at least one of the preceding claims **characterised in that** a solenoid tube (7) of the actuating solenoid (M) is structurally separated from the screw-in housing (1) and is screwed into abutment in the screw-in housing (1) such that the solenoid tube (7) fixes an outer flange (14) of a pole core (12).

## Revendications

1. Distributeur à siège (V) à visser, de préférence soupape à siège à 2/2 ou 3/2 voies en acier pour l'hydraulique à haute pression à contrôle et commande magnétique directs, comprenant un corps fileté (1), dans lequel est positionné dans la direction axiale au moins un manchon (21) formant un siège de soupape (20), et un cône de soupape (15) intérieur, qui présente une surface de siège (31) de diamètre extérieur plus grand que le diamètre intérieur du siège de soupape (20), **caractérisé en ce que** le manchon (21) est positionné axialement dans le corps fileté (1) par un assemblage par filetage (23) et rendu étanche par une zone d'ajustement serré (24), et que la zone d'ajustement serré (24) forme une sécurité de rotation pour l'assemblage par filetage (23).

2. Distributeur à siège à visser suivant la revendication 1,
**caractérisé en ce que** la zone d'ajustement serré (24) est formée entre des surfaces d'ajustage cylindriques circulaires (25, 32) dans le corps fileté (1) et sur le manchon (21).

3. Distributeur à siège à visser suivant la revendication 1,
**caractérisé en ce que** la position axiale du manchon (21) dans le corps fileté (1) est ajustable par un mouvement de rotation relatif entre le corps fileté (1) et le manchon (21) par l'intermédiaire de l'assemblage par filetage (23).

4. Distributeur à siège à visser suivant la revendication 1,
**caractérisé en ce que** l'assemblage par filetage (23) présente un filetage à pas fin (29, 30).

5. Distributeur à siège à visser suivant la revendication 1,
**caractérisé en ce que** les diamètres de l'assemblage par filetage (23) et de la zone d'ajustement serré (24) sont à peu près égaux.

6. Distributeur à siège à visser suivant la revendication 1,
**caractérisé en ce que** la longueur axiale (b) de l'assemblage par filetage (23) est plus grande que la longueur axiale (a) de la zone d'ajustement serré (24).

7. Distributeur à siège à visser suivant la revendication 2,
**caractérisé en ce que** le diamètre extérieur du manchon (21) a une réalisation décroissante à la suite de la surface d'ajustage (25).

8. Distributeur à siège à visser suivant la revendication 2,
**caractérisé en ce qu'**un étagement diamétral (27) est prévu sur le manchon (21) entre la surface d'ajustage (25, 32) et une section filetée (29, 30), et une gorge (28) est prévue dans le corps fileté (1).

9. Distributeur à siège à visser suivant la revendication 1,
**caractérisé en ce qu'**une prise de vissage (22), de préférence un six pans creux, est prévue dans le manchon (21).

10. distributeur à siège à visser suivant la revendication 1,
**caractérisé en ce que** le corps fileté (1) s'étend sur le manchon (21) et au moins approximativement jusqu'à l'extrémité libre du manchon (21) et présente, de préférence, deux gorges de réception de joints d'étanchéité du côté extérieur.

11. Distributeur à siège à visser suivant la revendication 1,
**caractérisé en ce que** deux rangées périphériques,
distantes dans la direction axiale, de passages transversaux (33, 36) sont formées dans le corps fileté (1), et qu'un siège de soupape supplémentaire (19) est prévu entre les rangées dans le corps fileté (1).

12. Distributeur à siège à visser suivant la revendication 11,
**caractérisé en ce que** les passages transversaux (33, 36) débouchent respectivement dans une gorge annulaire (34, 37) du côté extérieur du corps fileté (1).

13. Distributeur à siège à visser suivant l'une au moins des revendications précédentes, **caractérisé en ce que** le corps fileté (1) est vissé dans un alésage étagé (3), de préférence d'un bloc (2), en butée sur le débouché de l'alésage étagé, et qu'une extrémité du corps fileté (1), située dans l'alésage étagé (3), et l'extrémité libre du manchon (21) sont en vis-à-vis sans butée, à distance axiale, d'un fond de l'alésage étagé (3).

14. Distributeur à siège à visser suivant l'une au moins des revendications précédentes, **caractérisé en ce qu'**un tube magnétique (7) de l'aimant d'actionnement (M) a une construction séparée du corps fileté (1) et est vissé en butée dans le corps fileté (1) sous fixation d'une bride extérieure (14) d'un noyau polaire (12).
